# EUROPEAN PATENT APPLICATION

(11) **EP 1 801 987 A1**
(43) Date of publication of application: **27.06.2007**
(21) Application number: 05780834.7
(22) Date of filing: 29.08.2005
(51) Int. Cl.: H04B 1/38, H01Q 1/24

(54) **RADIO COMMUNICATION MODULE AND RADIO COMMUNICATION DEVICE**

(30) Priority: 30.08.2004 JP 2004249977; 11.08.2005 JP 2005233406
(71) Applicant: MITSUBISHI MATERIALS CORPORATION, Tokyo 100-8117 (JP)
(72) Inventor: YOKOSHIMA, Takao, Mitsubishi Materials Corp., 2270, OazaYokoze (JP); TARI, Kazuyoshi, Mitsubishi Materials Corp., 2270, OazaYokoze (JP); NAKAMURA, Kenzo, Mitsubishi Materials Corp., 2270, OazaYokoze (JP)
(74) Representative: HOFFMANN EITLE
(86) International application number: PCT/JP2005/015642
(87) International publication number: WO 2006/025312

(57) **Abstract**

A radio communication module transmitting and receiving a radio wave includes: an antenna circuit (1) that transmits and receives the radio wave by a loading inverted-F antenna; and a radio communication circuit (14) that has at least one of a control circuit (4) controlling radio communication, a modulation/demodulation circuit (3) performing frequency modulation, a frequency conversion circuit (2) performing frequency conversion, and an interface circuit (5) performing data input and output. In this structure, when the radio wave used for radio communication has a wavelength λ (m), a frequency f (Hz), a light velocity c (m/s), and a coefficient a = 70 to 130, a distance between a loading unit (6) of the loading inverted-F antenna and the radio communication circuit (14) is set to x (m) not smaller than x = λ × (√(f/c))/a in a direction perpendicular to a longitudinal direction of the loading unit (6) when they are mounted on a first substrate.

## Description

### BACKGROUND OF THE INVENTION

### Field of the Invention

The present invention relates to a radio communication module and a radio communication device, on which an inverted-F loading antenna for radio communication is mounted.

### Background Art

A technique disclosed in Japanese Patent No. 3275632 is known as a radio communication device that reduces the size of a case and prevents a gain from being lowered. This radio communication device provides two antennas in the case in order to improve the gain.

However, in this radio communication device, since two antennas are provided in the case, design of the radio communication device is complex and a maker manufacturing a cellular phone using the radio communication device needs to adjust optimal arrangement of the two antennas.

### SUMMARY OF THE INVENTION

The present invention has been finalized in view of the above-described problems, and it is an object of the present invention to provide a radio communication module and a radio communication device that does not need to adjust the arrangement position of an antenna for preferable communication quality and is convenient in handling.

According to claim 1, there is provided a radio communication module that transmits and receives a radio wave using a loading inverted-F antenna mounted on a first substrate. The radio communication module includes an antenna circuit that transmits and receives a radio wave by the loading inverted-F antenna, and a radio communication circuit that has at least one of a control circuit controlling radio communication, a modulation/demodulation circuit performing frequency modulation, a frequency conversion circuit performing frequency conversion, and an interface circuit performing data input and output. In the radio communication module, when the radio wave used for radio communication has a wavelength λ (m), a frequency f (Hz), a light velocity c (m/s), and a coefficient a = 70 to 130, a distance between a loading unit of the loading inverted-F antenna and the radio communication circuit is set to x (m) not smaller than x = λ × (√(f/c))/a in a direction perpendicular to a longitudinal direction of the loading unit when they are mounted on the first substrate.

According to claim 2, in the radio communication module according to claim 1, when a frequency ranging from 408.5 MHz to 451.5 MHz is used for radio communication, the distance between the loading unit of the loading inverted-F antenna and the radio communication circuit may be set to 10 mm or more in the direction perpendicular to the longitudinal direction of the loading unit when they are mounted on the first substrate.

According to claim 3, in the radio communication module according to claim 1, when a frequency ranging from 2.4 GHz to 2.5 GHz is used for radio communication, the distance between the loading unit of the loading inverted-F antenna and the radio communication circuit may be set to 4 mm or more in the direction perpendicular to the longitudinal direction of the loading unit when they are mounted on the first substrate.

According to claim 4, the radio communication module according to any one of claims 1 to 3 may further include an insulation case that secures the distance between the loading unit of the loading inverted-F antenna and the radio communication circuit in the direction perpendicular to the longitudinal direction of the loading unit.

According to claim 5, a radio communication device that is mounted on a second substrate includes the radio communication module according to any one of claims 1 to 4, and circuits that, among the control circuit, the modulation/demodulation circuit, the frequency conversion circuit, and the interface circuit, are excluded from the radio communication circuit and mounted on the second substrate,.

According to claim 6, a radio communication device to be mounted on an object to be measured includes the radio communication module according to any one of claims 1 to 4, circuits that, among the control circuit, the modulation/demodulation circuit, the frequency conversion circuit, are excluded from the radio communication circuit, and a sensor that transmits information on the measured object from the radio communication module. In the radio communication device, when the radio wave used for radio communication has a wavelength λ (m), a frequency f (Hz), a light velocity c (m/s), and a coefficient a = 70 to 130, a distance between the loading unit of the loading inverted-F antenna and the radio communication circuit is set to x (m) not smaller than x = λ × (√(f/c))/a in the direction perpendicular to the longitudinal direction of the loading unit.

### Effects of the invention

According to the radio communication module of claim 1, the distance between the loading unit of the loading inverted-F antenna and the radio communication circuit is set to x (m) not smaller than x =λ × (√(f/c))/a in the direction perpendicular to the longitudinal direction of the loading unit of the loading inverted-F antenna. Therefore, radiation and reception characteristics can be prevented from deteriorating due to the radio communication circuit.

According to the radio communication module of claim 2, the distance between the loading unit of the loading inverted-F antenna and the radio communication circuit is set to 10 mm or more in the direction perpendicular to the longitudinal direction of the loading unit of the loading inverted-F antenna. Therefore, it is possible to obtain preferable communication quality when communication is performed using a frequency ranging from 408.5 MHz to 451.5 MHz.

According to the radio communication module of claim 3, the distance between the loading unit of the loading inverted-F antenna and the radio communication circuit is set to 4 mm or more in the direction perpendicular to the longitudinal direction of the loading unit of the loading inverted-F antenna. Therefore, it is possible to obtain preferable communication quality when communication is performed using a frequency ranging from 2.4 GHz to 2.5 GHz.

According to the radio communication module of claim 4, the insulation case is provided around the radio communication circuit so as to secure a predetermined distance between the loading unit of the loading inverted-F antenna and the radio communication circuit in a radial direction of the loading unit of the loading inverted-F antenna. Therefore, a conductor or a dielectric can be prevented from entering within the predetermined distance, and thus constantly stable communication quality can be obtained.

According to the radio communication device of claim 5, stable communication quality can be obtained without adjusting the position of the loading inverted-F antenna. Therefore, a user who wants to use the radio communication device can manufacture a radio communication device having preferable communication quality, without taking the arrangement of the radio communication module and other circuits into account.

In the radio communication device according to claim 6, the sensor that transmits the information on the object to be measured is provided, and the distance between the object to be measured and the loading unit is set to x (m) not smaller than x = λ × (√(f/c))/a in the direction perpendicular to the longitudinal direction of the loading unit. Therefore, even though the object to be measured has a metal case, the sensor can transmit the information on the object to be measured, without undergoing an electro-magnetic influence.

### BRIEF DESCRIPTION OF THE DRAWINGS

FIG. 1 is a plan view of a radio communication module 30 according to an embodiment of the invention.
FIG. 2 is a block diagram showing the general configuration of a radio communication device 20.
FIG. 3 is a view showing the configuration of an antenna circuit 1 according to an embodiment of the invention.
FIG. 4 is a view showing the configuration of an antenna circuit 1 having mounted thereon a loading inverted-F antenna.
FIG. 5 is a cross-sectional view of the radio communication module 30 according to the embodiment of the invention.
FIG. 6 is a graph showing the relationship between a distance L7 between a loading unit 6 and a radio communication circuit 14, and an average gain and a bandwidth.
FIG. 7 is a plan view showing an example where the radio communication module 30 is mounted on a substrate b1 of a radio communication device 14.
FIG. 8 is a cross-sectional view showing an example of the configuration of the radio communication device 20 according to the embodiment of the invention.

### DESCRIPTION OF THE PREFERRED EMBODIMENTS

Hereinafter, a radio communication module 30 according to an embodiment of the invention will be described with reference to the drawings.

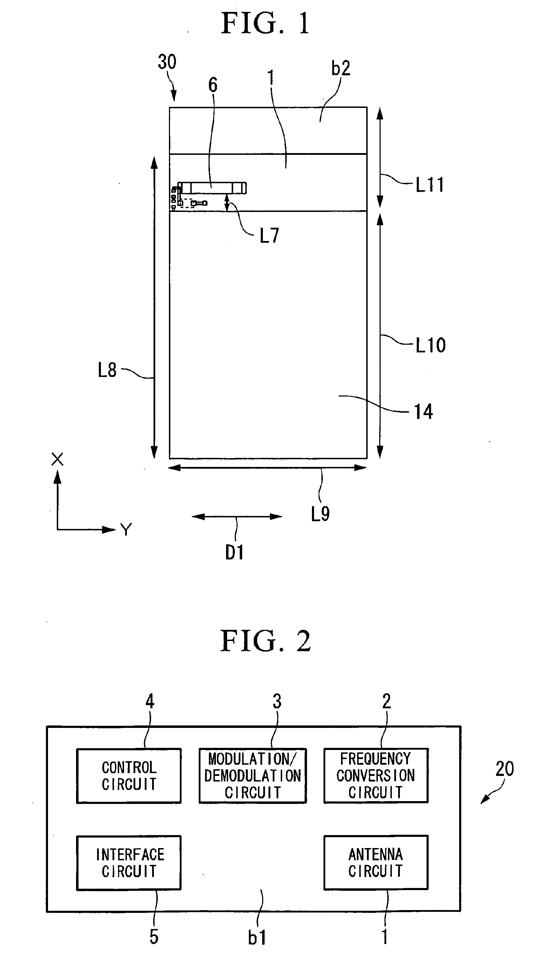

FIG. 2 is a block diagram showing the general configuration of a radio communication device 20 for radio communication. In the radio communication device 20, an antenna circuit 1, a frequency conversion circuit 2, a modulation/demodulation circuit 3, a control circuit 4, and an interface circuit 5 are mounted on a substrate b1.

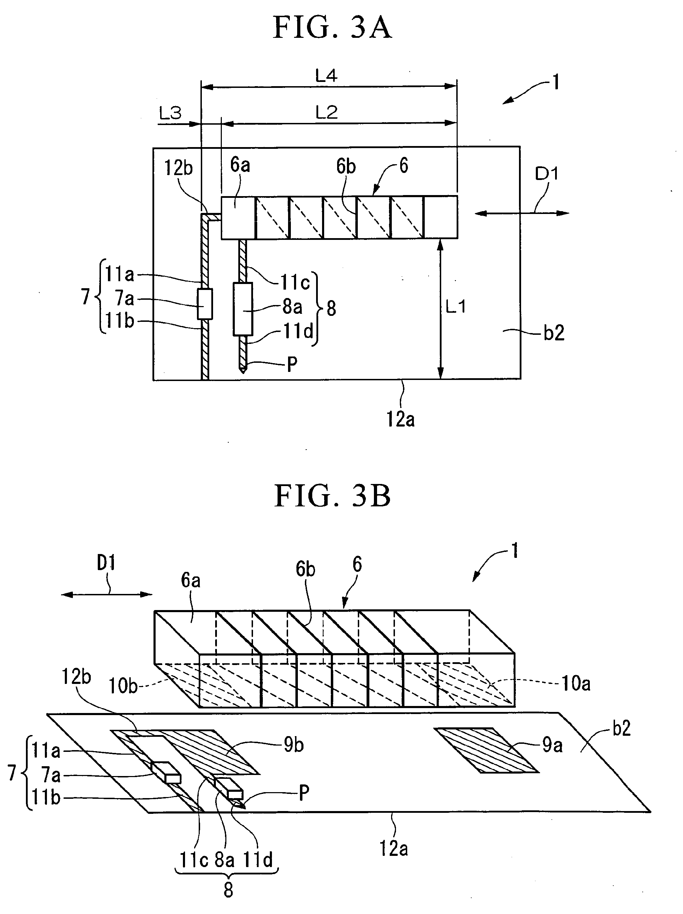

The antenna circuit 1 is a loading inverted-F antenna and is used for wireless data transmission or reception. The configuration of the antenna circuit 1 used in this embodiment will be described below in detail with reference to FIG. 3.

When the antenna circuit 1 receives a radio wave, a signal according to the radio wave is output to the frequency conversion circuit 2. The frequency conversion circuit 2 converts the signal output from the antenna circuit 1 from a high frequency into a low frequency.

The modulation/demodulation circuit 3 demodulates the signal converted from the high frequency to the low frequency by the frequency conversion circuit 2. The interface circuit 5 converts the signal demodulated by the modulation/demodulation circuit 3 into data and outputs the data to the outside. The control circuit 4 controls the frequency conversion circuit 2, the modulation/demodulation circuit 3, and the interface circuit 5.

Meanwhile, when the radio communication device 20 transmits data, a process opposite to a case where the radio wave is received is performed. Specifically, data input to the radio communication device 20 are wirelessly transmitted from the antenna circuit 1 through the interface circuit 5, the modulation/demodulation circuit 3, and the frequency conversion circuit 2.

Next, the configuration of the antenna circuit 1 according to this embodiment will be described with reference to FIGS. 3A and 3B. FIG. 3A is a plan view of the antenna circuit 1, and FIG. 3B is an exploded perspective view of the antenna circuit 1. In this embodiment, a case where a loading inverted-F antenna is mounted on the antenna circuit 1 will be described.

As shown in FIG. 3A, the antenna circuit 1 includes a substrate b2 formed of an insulating material, such as resin, and a loading unit 6, an inductor unit 7, and a capacitor unit 8 that are disposed on a surface of the substrate b2, and a feeding point that is connected to the frequency conversion circuit 2 (see FIG. 2) provided outside the antenna circuit 1.

The loading unit 6 is configured by forming a conductor pattern 6b in a spiral shape in the longitudinal direction D1 of the surface of a rectangular parallelepiped element body 6a formed of a dielectric material, such as alumina.

Both ends of the conductor pattern 6b are connected to connection electrodes 10a and 10b formed on the rear surface of the element body 6a so as to be electrically connected to rectangular installation conductors 9a and 9b (FIG. 3B) provided on the surface of the substrate b2, respectively. Further, one end of the conductor pattern 6b is electrically connected to the inductor unit 7 and the capacitor unit 8 through the installation conductor 9b and the other end thereof is opened.

The inductor unit 7 has a chip inductor 7a. One end of the chip inductor 7a is connected to the installation conductor 9b through a linear conductive pattern 11a provided on the surface of the substrate b1. The other end of the chip inductor 7a is connected to a ground (not shown) through a linear conductive pattern 11 b provided on the surface of the substrate b2.

The conductive pattern 11a is formed such that an edge 12b thereof is parallel with the longitudinal direction D 1.

The capacitor unit 8 has a chip capacitor 8a. One end of the chip capacitor 8a is connected to the installation conductor 9b through the linear conductive pattern 11c provided on the surface of the substrate 1. The other end of the chip capacitor 8a of capacitor unit 8 is connected to the feeding point P through the linear conductive pattern 11d provided on the surface of the substrate 1.

The capacitance of the chip capacitor 8a is adjusted to match input impedance of the frequency conversion circuit 2 at the feeding point P.

In the antenna circuit 1 according to this embodiment, the following values are used as dimensions L1 to L4. That is, a distance L1 between the loading unit 6 and one edge 12a of the substrate b1 is set to 10 mm. A length L2 of the loading unit 6 in the longitudinal direction D1 is set to 16 mm. A length of an edge 12b of the conductive pattern 11a in a portion parallel with the longitudinal direction D1 is set to 2.5 mm. A physical length L4 of an antenna element parallel with one edge 12a of the substrate b1 is set to 18.5 mm.

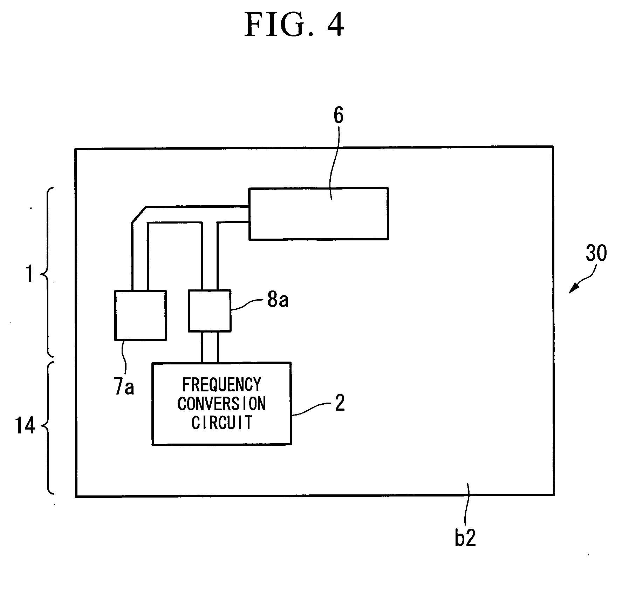

Next, the radio communication module 30 according to the embodiment of the invention will be described with reference to FIG. 4. The radio communication module 30 is formed by mounting the antenna circuit 1 (FIG. 2) and a radio communication circuit 14 on the substrate b2.

The radio communication circuit 14 has the frequency conversion circuit 2 performing frequency conversion.

Although a case where the radio communication circuit 14 has the frequency conversion circuit 2 is described in this embodiment, but the invention is not limited thereto. Specifically, the radio communication circuit 14 may have at least one of the frequency conversion circuit 2, the modulation/demodulation circuit 3, the control circuit 4, and the interface circuit 5. In this case, among the frequency conversion circuit 2, the modulation/demodulation circuit 3, and the control circuit 4, circuits that are excluded from the radio communication circuit 14 are separately mounted on the substrate, on which the radio communication module 30 is mounted.

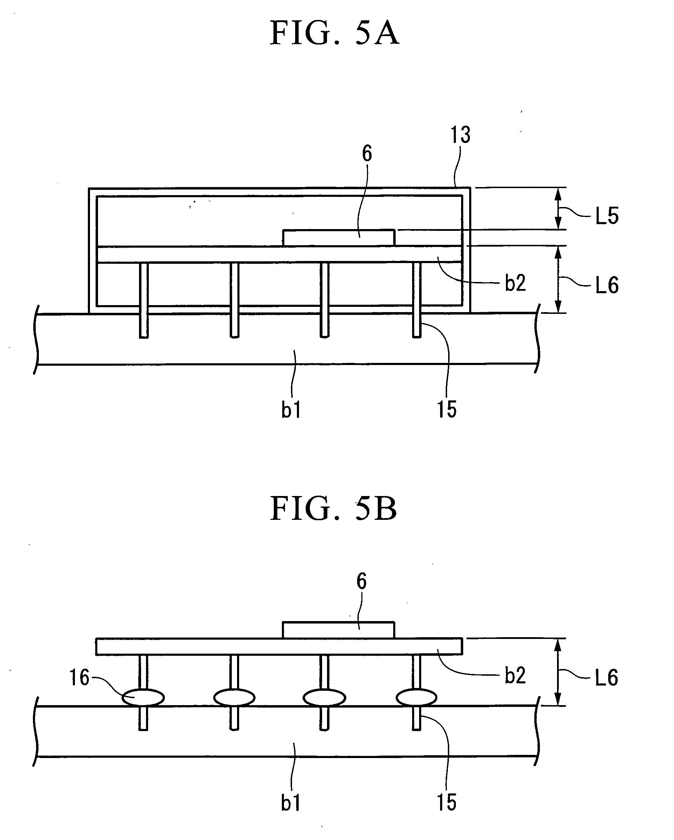

FIG. 5A is a cross-sectional view of the radio communication module 30 (FIG. 4) according to this embodiment. FIG. 5A is an example where the radio communication module 30 is mounted on the substrate b1 of the radio communication 20.

The radio communication module 30 is covered with an insulation case 13. On the substrate b2 installed in the case 13, a loading unit 6 of the antenna circuit 1 and the like are mounted. Wiring lines 15 connected to the frequency conversion circuit 2 and the like mounted on the substrate b2 are led out from the case 13. In order to prevent communication quality from deteriorating, it is preferable that a distance L5 between the loading unit 6 and the upper surface of the case 13 and a distance L6 between the loading unit 6 and the lower surface of the case 13 be set to a predetermined distance. For example, it is preferable that the distances L5 and L6 be set to 10 mm or more.

The use of the case 13 makes it possible to ensure predetermined regions on the upper and lower sides of the loading unit 6 performing wireless transmission and reception in a direction perpendicular to the substrate 2b. Accordingly, it is possible to prevent a conductor or a dielectric from approaching the loading unit 6. Therefore, it is possible to prevent communication quality of the radio communication module 30 from deteriorating.

Since the case 13 covers the radio communication module 30, it is possible to protect the antenna circuit 1 or the frequency conversion circuit 2 provided in the case 13 from external impact.

If it is possible to prevent a conductor or a dielectric from approaching the vicinity of the loading unit 6 by any method, the case 13 (FIG. 5A) does not need to be provided. For example, as shown in FIG. 5B, when stoppers 16 are formed on the wiring lines 15 led out from the substrate b1 so as to ensure the distance L6 between the loading unit 6 and the substrate b1 of the radio communication device 20, it is possible to block the loading unit 6 from the influences of other circuits.

Next, the effects when the radio communication module 30 according to this embodiment is used will be described. In order to verify the effects, the radio communication module 30 shown in FIG. 1 is used.

In the radio communication module 30 shown in FIG. 1, the radio communication circuit 14 and the antenna circuit 1 including the loading unit 6 and the like are mounted on the substrate b2.

Further, dimensions L8 to L11 of the individual parts of the radio communication module 30 shown in FIG. 1 are set to 86 mm, 54 mm, 70 mm, and 30 mm, respectively.

An experiment on how communication quality of the radio communication module 30 varies according to the distance between the loading unit 6 of the antenna circuit 1 and a conductor or a dielectric is performed. As a result, even though a conductor or a dielectric approaches the loading unit 6 in the longitudinal direction D 1 thereof, communication quality does not change so much. Therefore, it is possible to provide a space for other circuits in the longitudinal direction D 1 of the loading unit 6.

Meanwhile, when a conductor or a dielectric approaches the loading unit 6 of the antenna circuit 1 in the direction perpendicular to the longitudinal direction D1 of the loading unit 6, a variation in communication quality becomes large.

When the antenna 1 transmits or receives the radio wave, it is considered that the radio communication circuit 14 having a conductor or a dielectric and the like has the most profound effect on communication quality. Then, an experiment on how communication quality varies according to the distance L7 between the loading unit 6 and the radio communication circuit 14 is performed.

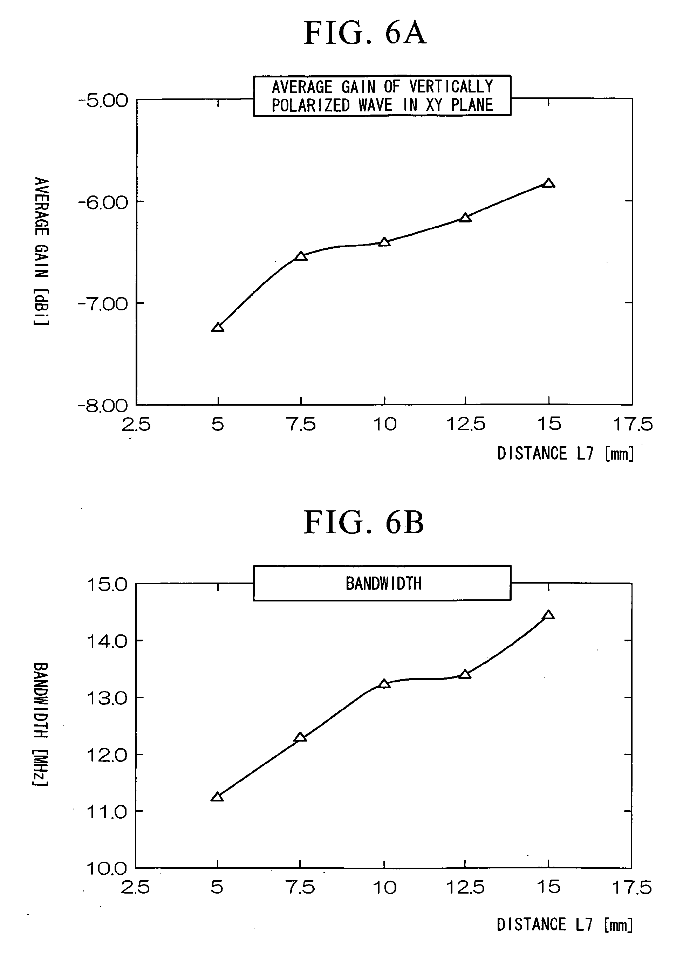

FIGS. 6A and 6B are graphs showing how communication quality varies according to the distance L7 (FIG. 1) between the loading unit 6 and the radio communication circuit 14 when a radio wave having a frequency f of 434 MHz (a wavelength λ of 69 cm) is used.

More specifically, FIG. 6A is a graph showing the relationship between the distance L7 and an average gain of a vertically polarized wave in an XY plane. As the distance L7 increases from 5 mm to 15 mm, the average gain is improved. In particular, when the distance L7 is about 10 mm, a variation in the average gain is small, and thus the stable average gain is obtained.

FIG. 6B is a graph showing the relationship between the distance L7 and the bandwidth of the radio wave having a frequency f of 434 MHz. As the distance L7 increases from 5 mm to 15 mm, the bandwidth increases. In particular, when the distance L7 is in a range of about 10 mm to 12.5 mm, the variation in the average gain is small, and thus the stable bandwidth is obtained.

Even though a frequency range of 408.5 MHz to 451.5 MHz around a frequency f of 430 MHz is used for radio communication, if the distance L7 between the loading unit 6 of the antenna circuit 1 and the radio communication circuit 14 is set to 10 mm or more, it is possible to perform radio communication with preferable communication quality.

FIGS. 6A and 6B show the results when radio communication is performed using the frequency f of 434 MHz. However, even though the same experiment is performed using a radio wave having a frequency ranging from 2.4 GHz to 2.5 GHz (a wavelength ranging from 12 cm to 12.5 cm), it can be seen that, if the distance L7 between the loading unit 6 and the radio communication circuit 14 is set to 4 mm or more, it is possible to perform radio communication with preferable communication quality.

From the experiment result, it is considered that, when the radio wave used for radio communication has a wavelength λ (m), a frequency f(Hz), a light velocity c (m/s), and a coefficient a = 70 to 130, if the distance L7 between the loading unit 6 and the radio communication circuit 14 is set to x (m) not smaller than x = λ × (√(f/c))/a, it is possible to perform radio communication with preferable communication quality. Here, c represents the light velocity and is set to 3 × 10⁸ (m/s).

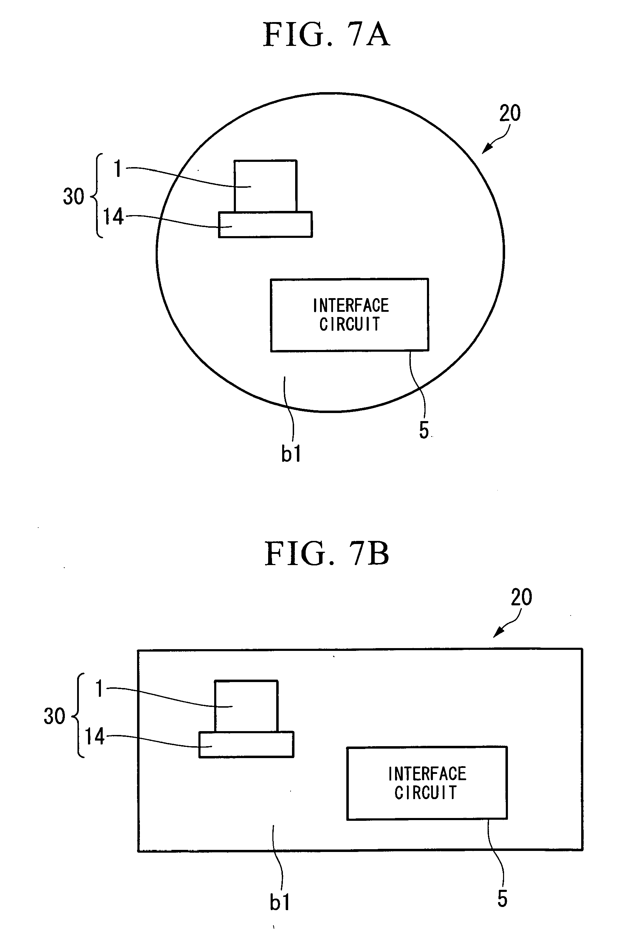

When the radio communication module 30 according to this embodiment is used, as shown in FIGS. 7A and 7B, it is possible to perform radio communication with preferable communication quality, regardless of a position where the radio communication module 30 is mounted on the substrate b1 or the shape of the substrate.

Specifically, when the interface circuit 5 including a conductor or a dielectric and other circuits are separated by a predetermined distance from the loading unit 6 of the antenna circuit 1 in the radial direction of the loading unit 6, it is possible to constantly perform stable communication without being affected by those circuits.

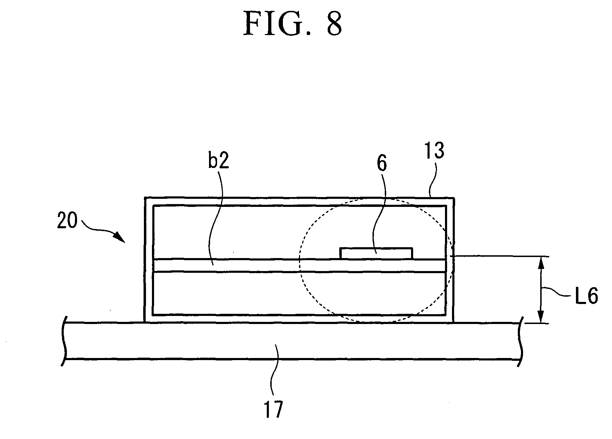

In the descriptions of FIGS. 5A and 5B, the loading unit 6 is mounted on the substrate b2, and other circuits including the frequency conversion circuit 2 are mounted on the substrate b1. However, the invention is not limited thereto. For example, the radio communication device 20 may be configured as shown in FIG. 8. The radio communication device 20 is mounted on a device as an object to be measured, which is covered by a metal case 17. Then, the radio communication device 20 measures, for example, a temperature of the device and wirelessly transmits information on the temperature. On the substrate b2 incorporated into the case 13 of the radio communication device 20, the frequency conversion circuit 2, the modulation/demodulation circuit 3, the control circuit 4, and the interface circuit 5 (not shown) are mounted. Further, the loading unit 6 of the antenna circuit 1 is mounted on the substrate b2 to be spaced by the direction L6 from the frequency conversion circuit 2, the modulation/demodulation circuit 3, the control circuit 4, the interface circuit 5, and the object to be measured (in this example, the metal case 17) in the direction perpendicular to the longitudinal direction of the loading unit 6.

If the radio communication device 20 is configured as described above, when the radio communication device 20 is mounted on the device as an object to be measured and measures the temperature of, for example, the metal case 17 of the device, it is possible to perform radio communication with an external device without undergoing electro-magnetic influences.

Although the embodiment of the invention has been described with reference to the drawings, the invention is not limited thereto, but various design modification can be made within the scope without departing from the subject matter of the invention. Industrial Applicability

The radio communication module according to the invention can be mounted on a portable terminal requiring reduction in the size and preferable communication quality.

## Claims

1. A radio communication module that transmits and receives a radio wave using a loading inverted-F antenna mounted on a first substrate, comprising:
an antenna circuit (1) that transmits and receives the radio wave by the loading inverted-F antenna; and
a radio communication circuit (14) that has at least one of a control circuit (4) controlling radio communication, a modulation/demodulation circuit (3) performing frequency modulation, a frequency conversion circuit (2) performing frequency conversion, and an interface circuit (5) performing data input and output, wherein
when the radio wave used for radio communication has a wavelength λ (m), a frequency f (Hz), a light velocity c (m/s), and a coefficient a = 70 to 130, a distance between a loading unit (6) of the loading inverted-F antenna and the radio communication circuit (14) is set to x (m) not smaller than x = λ × (√(f/c))/a in a direction perpendicular to a longitudinal direction of the loading unit (6) when they are mounted on the first substrate.

2. The radio communication module according to claim 1, wherein
when a frequency ranging from 408.5 MHz to 451.5 MHz is used for radio communication, the distance between the loading unit (6) of the loading inverted-F antenna and the radio communication circuit (14) is set to 10 mm or more in the direction perpendicular to the longitudinal direction of the loading unit (6) are mounted on the first substrate.

3. The radio communication module according to claim 1, wherein
when a frequency ranging from 2.4 GHz to 2.5 GHz is used for radio communication, the distance between the loading unit (6) of the loading inverted-F antenna and the radio communication circuit (14) is set to 4 mm or more in the direction perpendicular to the longitudinal direction of the loading unit (6) are mounted on the first substrate.

4. The radio communication module according to any one of claims 1 to 3, further comprising:
an insulation case (13) that ensures the distance between the loading unit (6) of the loading inverted-F antenna and the radio communication circuit (14) in the direction perpendicular to the longitudinal direction of the loading unit (6).

5. A radio communication device that is mounted on a second substrate, comprising:
the radio communication module according to any one of claims 1 to 4;
circuits that, among the control circuit (4), the modulation/demodulation circuit (3), the frequency conversion circuit (2), and the interface circuit (5), are excluded from the radio communication circuit (14) and mounted on the second substrate.

6. A radio communication device to be mounted on an object to be measured, comprising:
the radio communication module according to any one of claims 1 to 4;
circuits that, among the control circuit (4), the modulation/demodulation circuit (3), the frequency conversion circuit (2), are excluded from the radio communication circuit (14); and
a sensor that transmits information on the measured object from the radio communication module, wherein
when the radio wave used for radio communication has a wavelength λ (m), a frequency f (Hz), a light velocity c (m/s), and a coefficient a = 70 to 130, a distance between a loading unit (6) of the loading inverted-F antenna and the radio communication circuit (14) is set to x (m) not smaller than x = λ × (√(f/c))/a in a direction perpendicular to the longitudinal direction of the loading unit (6).
